# EUROPÄISCHE PATENTSCHRIFT

(11) **EP 1 319 318 B1**
(45) Veröffentlichungstag und Bekanntmachung des Hinweises auf die Patenterteilung: **18.02.2004**
(21) Anmeldenummer: 00967588.5
(22) Anmeldetag: 19.09.2000
(51) Int. Cl.: H04Q 7/38

(54) **TELEKOMMUNIKATIONSANLAGE MIT EINER BASISSTATION UND ZUMINDEST EINEM MOBILTEIL SOWIE EINEM ZWISCHENVERSTÄRKER**
TELECOMMUNICATIONS INSTALLATION WITH A BASE STATION AND AT LEAST ONE MOBILE PART AND AN INTERMEDIATE REPEATER
INSTALLATION DE TELECOMMUNICATION COMPRENANT UNE STATION DE BASE ET AU MOINS UN ELEMENT MOBILE AINSI QU'UN REPETEUR INTERMEDIAIRE

(43) Veröffentlichungstag der Anmeldung: 18.06.2003
(73) Patentinhaber: SIEMENS AKTIENGESELLSCHAFT, 80333 München (DE)
(72) Erfinder: BIEDERMANN, Rolf, 48683 Ahaus (DE)
(86) Internationale Anmeldenummer: PCT/DE2000/003255
(87) Internationale Veröffentlichungsnummer: WO 2002/025979

(56) Entgegenhaltungen:
- WO-A-95/26615
- "RADIO EQUIPMENT AND SYSTEMS (RES);DIGITAL ENHANCED CORDLESS TELECOMMUNICATIONS (DECT); COMMON INTERFACE (CI); IDENTITIES AND ADDRESSING" EUROPEAN TELECOMMUNICATION STANDARD,XX,XX, Bd. ETS 300175-6, 1. September 1996 (1996-09-01), Seiten 1-42, XP002072371

## Beschreibung

Die Erfindung betrifft eine Telekommunikationsanlage mit einer Basisstation und zumindest einem Mobilteil sowie einem Zwischenverstärker nach dem Oberbegriff des Anspruchs 1.

Eine solche Telekommunikationsanlage ist aus der WO 95/26615 A2 bekannt, bei der sich das Mobilteil zum Senden und/oder Empfangen der Basisstation bedient, zur Vergrößerung der Sende- und/oder Empfangsreichweite zwischen der Basisstation und den Mobilteilen zumindest ein Zwischenverstärker vorgesehen ist und das Mobilteil eine Identifikationskennzeichnung für die Basisstation und den Zwischenverstärker abfragt.

Telekommunikationsanlagen der eingangs genannten Art finden beispielsweise dort Verwendung, wo die Entfernung zwischen Mobilteilen und einer zugehörigen Basisstation relativ groß werden kann, etwa weil ein Gebäude eine große Ausdehnung hat oder weil der Bediener sich möglicherweise im Garten aufhalten will, von wo die Sendeleistung zur üblicherweise an einer zentralen Stelle im Haus angeordneten Basisstation zu gering ist. In solchen Fällen kann eine Signalweiterleitung und -verstärkung über einen Zwischenverstärker erreicht werden, über den der Funkverkehr zwischen der Basisstation und einem jeweils aktiven Mobilteil laufen kann. Üblicherweise wird dabei vom jeweils aktiven Mobilteil die Verbindung zum näher liegenden Sender gewählt, also etwa zum Zwischenverstärker, obwohl möglicherweise auch die Basisstation in - wenn auch etwas schwächerer - Reichweite ist. Damit laufen auch Gespräche, die direkt zwischen der Basisstation und dem Mobilteil stattfinden könnten, über den Umweg des Zwischenverstärkers. Übliche als Zwischenverstärker arbeitende Repeater haben jedoch nur zwei Kanäle. Damit ist das Problem verbunden, daß der Zwischenverstärker unter Umständen von beispielsweise Gesprächen blockiert ist, die auch ohne diesen in direkter Verbindung zwischen Mobilteil und Basisstation stattfinden könnten. Der Ruf von solchen Mobilteilen, die tatsächlich so weit von der Basisstation entfernt sind, daß sie den Zwischenverstärker benötigen, ist dann nicht mehr möglich. Etwa bei einem Sammelruf, bei dem die Telekommunikationsanlage von einem externen Teilnehmer angerufen wird und alle Mobilteile der angewählten Anlage ein entsprechendes Signal ausgeben sollten, sind dann einzelne Mobilteile unter Umständen nicht erreichbar und senden kein Rufsignal aus. Ein Anruf kann so einem Benutzer, der sich in der Nähe des nicht erreichten Mobilteils aufhält, entgehen.

Der Erfindung liegt das Problem zugrunde, hier Abhilfe zu schaffen.

Die Erfindung löst dieses Problem durch eine Telekommunikationsanlage mit den Merkmalen des Anspruchs 1. Hinsichtlich weiterer Ausgestaltungen der Erfindung wird auf die Unteransprüche 2 bis 7 verwiesen.

Durch die erfindungsgemäße Ausbildung einer Telekommunikationsanlage ist es möglich, eine Auswahl der Verbindung zwischen einem jeweiligen Mobilteil und der Basisstation dahingehend zu treffen, daß die Verbindung wahlweise über oder ohne Vermittlung des Zwischenverstärkers einstellbar ist. Damit können die Kanäle des Zwischenverstärkers für die Gespräche freigehalten werden, die den Zwischenverstärker wirklich benötigen.

Vorteilhaft ist dabei einstellbar, daß ein Mobilteil den Zwischenverstärker nur dann nutzen darf, wenn eine direkte Verbindung zur Basisstation nicht möglich ist.

Wenn an einigen Mobilteilen die Nutzung des Zwischenverstärkers ganz gesperrt ist, ist eine Hierarchie innerhalb der Telekommunikationsanlage geschaffen, die beispielsweise innerhalb eines Unternehmens nur solchen Mitarbeitern, die relativ weit von der Basisstation entfernt arbeiten, die volle Reichweitennutzung unter Zuhilfenahme des Zwischenverstärkers ermöglicht.

Weitere Vorteile und Einzelheiten der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: ein schematisches Blockschaltbild einer mit einer Basisstation, einem zwei Kanäle aufweisenden Repeater und drei Mobiltelefonen versehenen Telekommunikationsanlage bei versuchtem Verbindungsaufbau zu allen Mobilteilen,
- Fig. 2: ein schematisches Blockschaltbild einer erfindungsgemäßen Telekommunikationsanlage mit einer Basisstation, einem zwei Kanäle aufweisenden Repeater und drei Mobilteilen bei gleichzeitigem Ruf aller Mobilteile.

Die beispielhaft beschriebene Telekommunikationsanlage 1 umfaßt eine Basiseinheit 2 und mehrere Mobilteile 4, 5, 6.

Die Telekommunikationsanlage 1 ist eine TDMA- (time division multiplex access) Anlage, die über Zeitslots die Übertragung von Daten verschiedener Teilnehmer ermöglicht, wobei die Zeitslots über einen Multiplexer angesteuert werden. Auch andere Telekommunikationsanlagen sind möglich. Die Telekommunikationsanlage 1 kann als reine Telefonanlage ausgebildet sein oder auch andere Datenübertragung ermöglichen, etwa Kommunikation mit dem Internet oder mit einem internen Datennetz, insbesondere auch das Senden und Empfangen von e-mails.

Die Basisstation 2 ist über einen Anschluß verkabelt und sendet und empfängt im Funkverkehr von und zu den Mobilteilen 4, 5, 6 in einem üblichen Standard, beispielsweise im DECT-Standard (digital enhanced cordless communication) in Ausbildung des DECT-GAP-Standards (generic access profile), der die Kombination von Geräten verschiedener Hersteller und die Ausbildung weiterer Funktionen, beispielsweise einer Rufnummernanzeige, ermöglicht. Es kommen auch andere Standards in Betracht, beispielsweise Bluetooth, GSM, PHS oder UMTS.

Die Anzahl der Mobilteile 4, 5, 6 ist variabel und je nach Anforderungen zu wählen. Im vorliegenden Ausführungsbeispiel ist eine Telekommunikationsanlage 1 mit drei Mobilteilen 4, 5, 6 gezeigt.

Neben der Basisstation 2 ist zumindest ein Zwischenverstärker 7 vorgesehen, der wie eine weitere Basisstation in einem Mehrzellensystem Verbindungen zu den Mobilteilen 4, 5, 6 aufbauen kann. Der hier gezeigte Zwischenverstärker 7 verfügt allerdings nur über zwei Kanäle, so daß nur zwei Verbindungen V1, V2 zwischen der Basisstation 2 und zwei Mobilteilen 4, 5 gleichzeitig unter Signalweiterleitung durch den Zwischenverstärker 7 aufgebaut werden können. Der Zwischenverstärker 7 ist hier als Repeater ausgebildet, d.h., daß die Basisstation 2 diesen wie ein Mobilteil ansieht, auf die Mobilteile 4, 5, 6 der Repeater 7 jedoch wie eine weitere Basisstation 2 wirkt. Ein von der Basisstation 2 oder einem Mobilteil 4, 5, 6 über Funk übermitteltes Eingangssignal wird vom Repeater 7 aufgenommen und verstärkt unter Beibehaltung der ursprünglichen Bandbreite wieder abgegeben, um damit die physikalische Reichweite des Signals zu vergrößern. In einer TDMA-Telekommunikationsanlage 1 arbeitet der Repeater 7 ebenfalls mit Zeitslots. Es sind mehrere Repeater 7 in einer Telekommunikationsanlage 1 möglich.

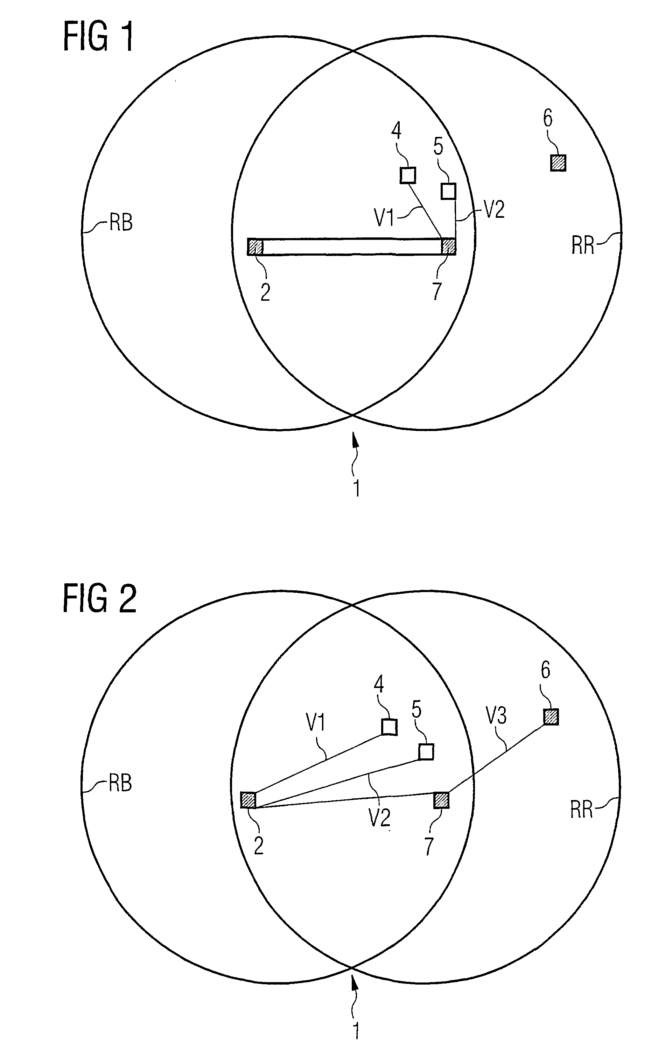

In Fig. 1 ist eine herkömmliche Telekommunikationsanlage mit einer Basisstation 2 und einem Repeater 7 schematisch dargestellt. Kreisförmig sind die Funkreichweite RB der Basisstation 2 und die Funkreichweite RR des Repeaters 7 dargestellt. Die Mobilteile 4 und 5 liegen sowohl in der Reichweite RB der Basisstation 2 als auch in der Reichweite RR des Repeaters 7, das dritte Mobilteil 6 liegt hingegen nur in der Funkreichweite RR des Repeaters 7. Die Mobilteile 4 und 5 liegen im gezeichneten Fall allerdings näher am Repeater 7 als an der Basisstation 2, so daß eine Verbindung V1, V2 zwischen diesen Mobilteilen 4, 5 und der Basisstation 2 - trotz der Lage der Mobilteile 4, 5 innerhalb der direkten Funkreichweite RB der Basisstation 2 - den Umweg über den Repeater 7 nehmen wird, da dieser aufgrund seiner Nähe zu den Mobilteilen 4, 5 dort das stärkere Signal erzeugen wird. Sofern daher eine Verbindung V1 zum Mobilteil 4 und eine Verbindung V2 zum Mobilteil 5 aufgebaut ist, sind bei einem Repeater 7, der über zwei Kanäle verfügt, diese belegt. Der Aufbau einer weiteren Verbindung V3 ist dann nicht mehr möglich. Sollte etwa zusätzlich das dritte Mobilteil 6 angewählt werden, wäre dieses nicht zu erreichen.

In Fig. 2 ist eine gleiche geometrische Anordnung der Basisstation 2, des Repeaters 7 und der Mobilteile 4, 5, 6 dargestellt. Auch die direkte Funkreichweite RB der Basisstation 2 und die Reichweite RR des Repeaters 7 sind ebenso groß wie in der Version nach Fig. 1.

Allerdings wird hier erfindungsgemäß vor Verbindungsaufbau die Identifizierung der Basisstation 2 und des Repeaters 7 in den jeweils aktiven Mobilteilen 4, 5, 6 abgefragt und von dem Mobiltelefon 4, 5, 6 eine Auswahl getroffen, mit wem die Verbindung eingegangen werden soll. Die Verbindungen V1 und V2 können dann, da sich die Mobilteile 4, 5 noch in der Reichweite RB der Basisstation 2 befinden, direkt ohne Zwischenschaltung des Repeaters 7 zwischen den Mobilteilen 4, 5 und der Basisstation 2 aufgebaut werden.

Um den Mobilteilen 4, 5, 6 Information zu vermitteln, ob die Verbindung mit der Basisstation 2 direkt oder über den Repeater 7 hergestellt werden soll, wird z. B. im Fall der Verwendung des DECT-Standards das ausgesandte PARK-Signal (primary access rights key) genutzt. Dieses Funksignal wird von der Basisstation 2 in regelmäßigen Zeitabständen (z. B. alle 10 ms) an die weiteren Teile der Telekommunikationsanlage 1 ausgesandt und enthält als letzten Bestandteil eine Identitätskennzeichnung, die beispielsweise in einem 3-Bit-Signal oder einem 8-Bit-Signal enthalten sein kann. Diese Identitätskennzeichnung wird als RPN (radio part number) bezeichnet. Auch der oder die Repeater 7 senden eine PARK mit zugehöriger RPN. Die Mobilteile 4, 5, 6 empfangen diese Signale (auch als Dummy Bearer bezeichnet) und können daran synchronisiert werden, um die Benutzung der Zeitslots zu ermöglichen. In den Mobilteilen 4, 5, 6 werden zudem die Feldstärken der eingehenden Signale der Basisstation 2 und des Repeaters 7 verglichen. Bei herkömmlichen Telekommunikationsanlagen wird die Verbindung dann zur stärker einfallenden Signalquelle hergestellt. Erfindungsgemäß wird hingegen anhand der RPN identifiziert, ob das Signal von der Basisstation 2 oder einem Repeater 7 stammt. Mit der unten erläuterten Vorzugschaltung, die sich softwareseitig einstellen läßt, kann dann ein Mobilteil 4, 5, 6 so eingestellt werden, daß es nach Abfrage der Identitätskennzeichnung entweder vorzugweise oder ausschließlich (s.u.) nur Verbindungen direkt mit der Basiseinheit 2 zuläßt. In gleicher Weise kann auch bei Einsatz mehrerer Repeater 7 eine Vorzugschaltung aufgebaut werden, so daß die Überlastung einzelner Repeater 7 vermieden wird.

Es kann entweder vorgesehen sein, daß ein oder mehrere Mobilteile, hier die Mobilteile 4 und 5, grundsätzlich nur über die Basisstation 2 direkt senden können, sie würden dann ihre Erreichbarkeit außerhalb von der Reichweite RB der Basisstation 2 verlieren, selbst wenn sie noch innerhalb der Reichweite RR des Repeaters 7 lägen. Dies kann insbesondere dann sinnvoll sein, wenn einige Mobilteile der Telekommunikationsanlage 1 ohnehin nur im Nahbereich der Basisstation 2 verwendet werden sollen, etwa wenn es innerhalb eines Unternehmens einen von der Basisstation erreichbaren Bürotrakt sowie einen weiter entfernt liegenden Produktionsbereich gibt und die Mitarbeiter des Bürotrakts sich während der Arbeitszeit nur in diesem aufhalten.

Alternativ kann auch möglich sein, einige Mobilteile, hier zumindest die Mobilteile 4 und 5, derart zu programmieren, daß sie bei gleichzeitiger Erreichbarkeit von Basisstation 2 und Repeater 7 stets die Verbindung mit der Basisstation 2 eingehen, selbst wenn das Signal des Repeaters 7 stärker ist. Bei dieser Einstellung wären die so programmierten Mobilteile auch im Bereich RR einer hinreichenden Feldstärke des Repeaters 7 außerhalb der Reichweite RB der Basisstation 2 erreichbar.

### Bezugszeichenliste

- 1: Telekommunikationsanlage
- 2: Basisstation
- 4: Mobilteil
- 5: Mobilteil
- 6: Mobilteil
- 7: Zwischenverstärker

## Patentansprüche

1. Telekommunikationsanlage (1) mit einer Basisstation (2) und mit zumindest einem Mobilteil (4;5;6), wobei sich das Mobilteil (4;5;6) zum Senden und/oder Empfangen der Basisstation (2) bedient, wobei zur Vergrößerung der Sende- und/oder Empfangsreichweite zwischen der Basisstation (2) und den Mobilteilen (4;5;6) zumindest ein Zwischenverstärker (7) vorgesehen ist und wobei das Mobilteil (4;5;6) eine Identifikationskennzeichnung für die Basisstation (2) und den Zwischenverstärker (7) abfragt,
**dadurch gekennzeichnet, daß**
das Mobilteil (4;5;6) derart ausgebildet ist, daß die Identifikationskennzeichnung vor dem Verbindungsaufbau abgefragt wird und mittels der abgefragten Identifikationskennzeichnung eine Auswahl getroffen wird, ob das Mobilteil (4;5;6) eine Verbindung mit dem Zwischenverstärker (7) oder eine Verbindung mit der Basisstation (2) eingehen soll.

2. Telekommunikationsanlage nach Anspruch 1, **dadurch gekennzeichnet, daß** für zumindest ein Mobilteil (4;5;6) der Verbindungsaufbau zu einem Zwischenverstärker (7) verhindert ist.

3. Telekommunikationsanlage nach Anspruch 1, **dadurch gekennzeichnet, daß** für zumindest ein Mobilteil (4;5;6) eine Vorzugschaltung vorgesehen ist, die bei Lage dieses Mobilteils (4;5;6) im Empfangsbereich (RR) des Zwischenverstärkers (7) und im direkten Empfangsbereich (RB) der Basisstation (2) die direkte Verbindung mit der Basisstation (2) aufbaut.

4. Telekommunikationsanlage nach Anspruch 3, **dadurch gekennzeichnet, daß** eine derartige Vorzugschaltung für alle Mobilteile (4;5;6) der Telekommunikationsanlage (1) vorgesehen ist.

5. Telekommunikationsanlage nach einem der Ansprüche 1 bis 4, **dadurch gekennzeichnet , daß** der Zwischenverstärker (7) durch einen Repeater gebildet ist.

6. Telekommunikationsanlage nach einem der Ansprüche 1 bis 5, **dadurch gekennzeichnet , daß** das Identifikationskennzeichen durch die ausgesandte RPN (radio part number) gegeben ist.

7. Telekommunikationsanlage nach einem der Ansprüche 1 bis 6, **dadurch gekennzeichnet , daß** die Telekommunikationsanlage (1) zur Übertragung zwischen der Basisstation (2) und dem oder den angeschlossenen Mobilteil(en) (4;5;6) den DECT-, Bluetooth-, GSM-, PHS- oder UMTS-Standard verwendet.

## Claims

1. Telecommunications installation (1) with a base station (2) and with at least one mobile part (4;5;6), with the mobile part (4;5;6) availing itself of the base station (2) for transmitting and/or receiving, with at least one intermediate amplifier (7) being provided between the base station (2) and the mobile parts (4;5;6) to amplify the transmission and/or receiving range and with the mobile part (4;5;6) requesting an identifier for the base station (2) and the intermediate amplifier (7),
**characterised in that**
the mobile part (4;5;6) is configured so that the identifier is requested before the connection is set up and a selection is made on the basis of the requested identifier as to whether the mobile part (4;5;6) should establish a connection with the intermediate amplifier (7) or a connection with the base station (2).

2. Telecommunications installation according to Claim 1,
**characterised in that** the setting up of a connection to an intermediate amplifier (7) is prevented for at least one mobile part (4;5;6).

3. Telecommunications installation according to Claim 1,
**characterised in that** preferred switching is provided for at least one mobile part (4;5;6), to set up the direct connection with the base station (2) when this mobile part (4;5;6) is located within the receiving range (RR) of the intermediate amplifier (7) and in the direct receiving range (RB) of the base station (2).

4. Telecommunications installation according to Claim 3,
**characterised in that** such preferred switching is provided for all mobile parts (4;5;6) of the telecommunications installation (1).

5. Telecommunications installation according to one of Claims 1 to 4, **characterised in that** the intermediate amplifier (7) is in the form of a repeater.

6. Telecommunications installation according to one of Claims 1 to 5, **characterised in that** the identifier is provided by the transmitted RPN (radio part number).

7. Telecommunications installation according to one of Claims 1 to 6, **characterised in that** the telecommunications installation (1) uses the DECT, Bluetooth, GSM, PHS or UMTS standard for transmission between the base station (2) and the connected mobile part (s) (4;5;6).

## Revendications

1. Système de télécommunication (1) avec une station de base (2) et, au moins, un poste mobile (4; 5; 6), le poste mobile (4; 5; 6) utilisant la station de base (2) pour émettre et/ou recevoir, au moins un amplificateur intermédiaire (7) étant prévu pour augmenter la portée d'émission et/ou de réception entre la station de base (2) et les postes mobiles (4; 5; 6) et le poste mobile (4; 5; 6) sollicitant, pour la station de base (2) et pour l'amplificateur intermédiaire (7), un indicatif d'identification,
**caractérisé par le fait**
**que** le poste mobile (4; 5; 6) est conçu de telle sorte que l'indicatif d'identification est sollicité avant l'établissement de la communication et qu'au moyen de l'indicatif d'identification sollicité on choisit si le poste mobile (4; 5; 6) doit établir une communication avec l'amplificateur intermédiaire (7) ou une communication avec la station de base (2).

2. Système de télécommunication selon la revendication 1
**caractérisé par le fait**
**que**, pour au moins un poste mobile (4; 5; 6), l'établissement de la communication vers un amplificateur intermédiaire (7) est empêchée.

3. Système de télécommunication selon la revendication 1
**caractérisé par le fait**
**que**, pour au moins un poste mobile (4; 5; 6), il est prévu un circuit préférentiel qui établit, dans le cas où ce poste mobile (4; 5; 6) se trouve dans la zone de réception (RR) de l'amplificateur intermédiaire (7) et dans la zone de réception directe (RB) de la station de base (2), la communication directe avec la station de base (2).

4. Système de télécommunication selon la revendication 3
**caractérisé par le fait**
**qu'**un tel circuit préférentiel est prévu pour tous les postes mobiles (4; 5; 6) du système de télécommunication (1).

5. Système de télécommunication selon l'une des revendications 1 à 4
**caractérisé par le fait**
**que** l'amplificateur intermédiaire (7) est formé par un répéteur.

6. Système de télécommunication selon l'une des revendications 1 à 5
**caractérisé par le fait**
**que** l'indicatif d'identification est fourni par le numéro RPN (radio part number) qui est envoyé.

7. Système de télécommunication selon l'une des revendications 1 à 6
**caractérisé par le fait**
**que** le système de télécommunication (1) destiné à la transmission entre la station de base (2) et le ou les postes mobiles (4; 5; 6) raccordés utilise la norme DECT ou la norme Bluetooth ou la norme GSM ou la norme PHS ou la norme UMTS.
